# EUROPÄISCHE PATENTANMELDUNG

(11) **EP 1 387 063 A2**
(43) Veröffentlichungstag der Anmeldung: **04.02.2004**
(21) Anmeldenummer: 03017305.8
(22) Anmeldetag: 31.07.2003
(51) Int. Cl.: F02D 9/04, F02D 11/04

(54) **Abgassystem für eine Brennkraftmaschine**

(30) Priorität: 03.08.2002 DE 10235528
(71) Anmelder: DaimlerChrysler AG, 70567 Stuttgart (DE)
(72) Erfinder: Wolpers, Friedemann, 71334 Waiblingen (DE)

(57) **Zusammenfassung**

Die Erfindung bezieht sich auf ein Abgassystem für eine Brennkraftmaschine, die mindestens eine Strömungsklappe und mindestens eine Stelleinheit enthält. Zwischen der Strömungsklappe und der Stelleinheit ist eine Hebelvorrichtung angeordnet zur Umsetzung einer Bewegung der Stelleinheit in eine Bewegung der Strömungsklappe. Diese Hebelvorrichtung enthält eine mit der Stelleinheit verbundene Zug- oder Schubstange und eine Welle, dergestalt, daß die Strömungsklappe und ein erster Hebel starr miteinander über diese Welle verbunden sind. Das freie Ende des ersten Hebels weist ferner ein Gelenk auf. Die erfindungsgemäße Hebelvorrichtung umfasst weiter folgendes: wenigstens einen weiteren Hebel und eine mehrhebelarmige Umlenkplatte mit 3 Gelenkachsen oder Anlenkpunkten, welche in Form eines Dreiecks angeordnet sind.

## Beschreibung

Die Erfindung betrifft ein Abgassystem für eine Brennkraftmaschine gemäß den im Oberbegriff des Anspruchs 1 angegebenen Merkmalen.

Die Leistungsabgabe einer Brennkraftmaschine ist proportional dem Luftdurchsatz, welcher wiederum proportional der Luftdichte ist, so daß die Leistung bekanntlich bei gleichem Hubvolumen und Drehzahl durch Vorverdichtung der Luft vor Eintritt in den oder die Zylinder, d.h. durch Aufladung, erhöht werden kann. Diese Aufladung kann durch einen Abgasturbolader erfolgen, welcher im wesentlichen aus zwei drehfest miteinander verbundenen Strömungsmaschinen besteht. Eine Turbine ist in einer Abgasleitung der Brennkraftmaschine angeordnet und wird vom Abgasstrom getrieben. Die Turbine treibt über eine drehfeste Verbindung einer Laderwelle den Verdichter an, welcher in der Einlaßleitung zur Brennkraftmaschine einen Ladedruck erzeugt.

Ein derartiger Abgasturbolader ist aus dem Buch "Abgasturbolader, Seite 36 - 39, Autor Michael Mayer, Verlag Moderne Industrie, Landsberg/Lech, 4. Auflage, 2001" bekannt. Die Ladedruckregelung erfolgt hier durch einen turbinenseitigen Bypass, in dem ein Teil der Abgasmenge um die Turbine herum geleitet wird. Die Ladedruckregelklappe, die den Bypass öffnet und schließt wird in Abhängigkeit vom Ladedruck durch eine federbelastete Membran angesteuert. Bei der dort beschriebenen selbstregelnden Ladedruckregelung wird die durch eine zylindrische Schraubenfeder vorgespannte Membran in der Steuerdose mit Ladedruck beaufschlagt. Sobald die Vorspannung der Feder durch den Ladedruck überwunden ist, wird die Bypassklappe mittels der Regelstange und des Verstellhebels geöffnet. Die Abgase strömen an der Turbine vorbei in die Abgasanlage.
In modernen Diesel- und Ottomotoren für PKWs werden heute elektronische Ladedruckregelverfahren eingesetzt. Die Betätigung der Klappe erfolgt wie bei der vorher beschriebenen selbstregelnden Ladedruckregelung. Anstelle des vollen Ladedrucks wird die Membran der Steuerdose mit einem modulierten Steuerdruck beaufschlagt. Strömungsklappen werden jedoch nicht nur zur Ladedruckregelung eingesetzt, sondern auch für andere Aufgaben am Abgassystem, wie zum Beispiel an einem Abgasturboladersystem zur gezielten Ansteuerung der verschiedenen Turbinen bei mehrstufiger Aufladung oder in einem Abgasreinigungssystem beispielsweise als Bypass-Klappe.

Die hier beschriebenen Strömungsklappen an Verbrennungsmotoren, die mit Druckdosen oder Stelleinheiten bewegt und mit Luft (Überdruck oder Unterdruck) angetrieben werden, haben jedoch einen Nachteil. Sie haben nur einen eingeschränkten Bewegungsbereich und eine geringe Maximalkraft. Aus Bauraumgründen können sie nicht beliebig groß gebaut werden, um den erforderlichen Schließdruck der Klappen zu gewährleisten.

Aufgabe der Erfindung ist es daher, ein Abgassystem für eine Brennkraftmaschine zur Verfügung zustellen, das trotz kleiner Stelleinheit einen großen Schwenkbereich der Strömungsklappen aufweist und gleichzeitig die Strömungsklappen sicher gegen den anliegenden Gasdruck verschließt.

Diese Aufgabe wird mit der Vorrichtung nach Anspruch 1 gelöst. Vorteilhafte Ausführungen der Erfindung sind Gegenstand der Beschreibung. Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung löst obengenannte Aufgabe durch ein Abgassystem für eine Brennkraftmaschine, enthaltend mindestens eine Strömungsklappe und mindestens eine Stelleinheit, wobei zwischen der Strömungsklappe und der Stelleinheit eine Hebelvorrichtung angeordnet ist zur Umsetzung einer Bewegung der Stelleinheit in eine Bewegung der Strömungsklappe. Die Hebelvorrichtung enthält ferner eine mit der Stelleinheit verbundene Zug- oder Schubstange und eine Welle, wobei die Strömungsklappe und ein erster Hebel starr miteinander über diese Welle verbunden sind. Das freie Ende des ersten Hebels weist außerdem ein Gelenk auf.
Erfindungsgemäß umfasst die Hebelvorrichtung weiter wenigstens einen weiteren Hebel und eine mehrhebelarmige Umlenkplatte mit 3 Gelenkachsen oder Anlenkpunkten, welche in Form eines Dreiecks auf der Umlenkplatte angeordnet sind. Gemäß einer bevorzugten Ausführungsform ist die Umlenkplatte als zweihebelarmige Umlenkplatte ausgeführt. Eine sehr vorteilhafte Weiterbildung der Erfindung besteht außerdem darin, daß eine der Gelenkachsen oder Anlenkpunkte der Umlenkplatte als starrer Drehpunkt ausgebildet ist, um die sich die beiden anderen Achsen auf einer Kreisbahn drehen können. Erfindungsgemäß ist außerdem der wenigstens eine weitere Hebel an einem Ende über ein Gelenk drehbar mit dem ersten Hebel, am anderen Ende über ein Gelenk drehbar mit der Umlenkplatte verbunden. Gemäß der Erfindung kann das Stellglied als ein weiterer Vorteil als Druckdose ausgebildet sein, welche mit Über- oder Unterdruck betreibbar ist. Desweiteren kann das Stellglied erfindungsgemäß auch als elektrischer, elektromechanischer oder hydraulischer Antrieb ausgebildet sein.

Die Erfindung wird nun beispielhaft anhand der beigefügten Zeichnung weiter beschrieben. Dabei zeigen die Ausführungsbeispiele in schematischer oder konstruktiver Darstellung:
- Fig. 1: als Stand der Technik eine konventionelle Hebelvorrichtung mit nur einem Hebel
- Fig. 2: eine mögliche konstruktive Ausführung einer erfindungsgemäßen Hebelvorrichtung
- Fig. 3: eine erfindungsgemäße Hebelvorrichtung mit maximal geöffneter Strömungsklappe
- Fig. 4: eine erfindungsgemäße Hebelvorrichtung mit geschlossener Strömungsklappe
- Fig. 5: das an der Klappenwelle wirkende Moment in Abhängigkeit des Verstellweges, wobei eine erfindungsgemäße zweihebelarmige Hebelvorrichtung mit einer konventionellen Hebelvorrichtung mit nur einem Hebel verglichen wird
- Fig. 6: den Klappenwinkel in Abhängigkeit des Verstellweges, wobei eine erfindungsgemäße zweihebelarmige Hebelvorrichtung mit einer konventionellen Hebelvorrichtung mit nur einem Hebel verglichen wird
- Fig. 7: eine mögliche konstruktive Ausführung eines Abgasturboladersystems, ausgeführt als zweistufige Aufladung, mit mehreren erfindungsgemäßen Hebelvorrichtungen

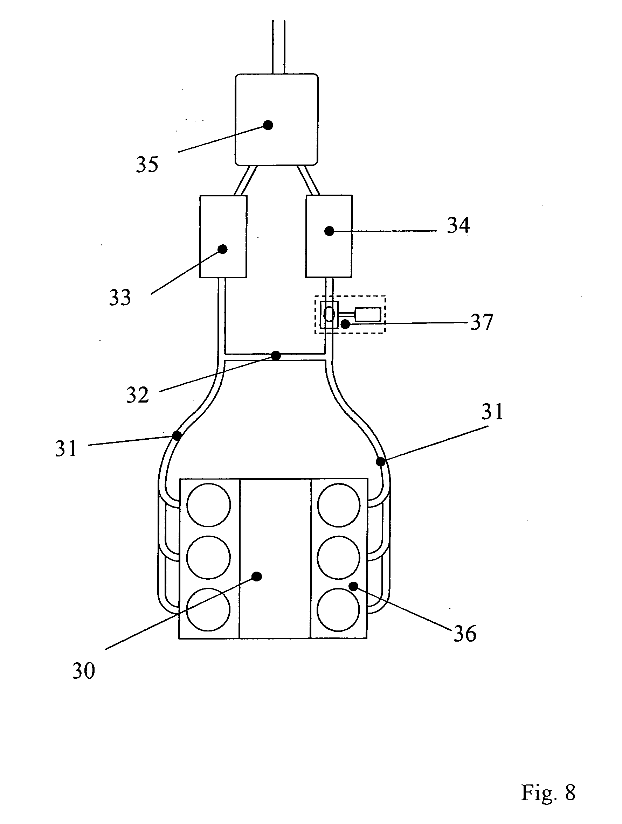

- Fig. 8: eine mögliche konstruktive Ausführung eines Abgasreinigungssystems mit erfindungsgemäßer Hebelvorrichtung

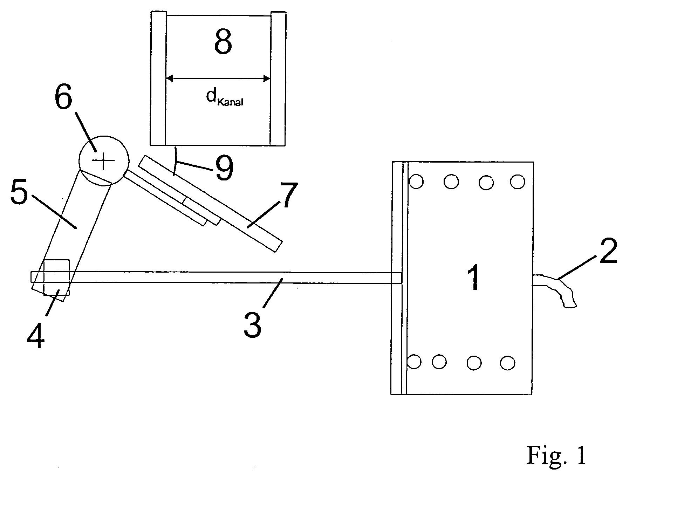

Fig. 1 beschreibt eine konventionelle Hebelvorrichtung mit einem Stellglied 1, an der sich ein Über- oder Unterdruckanschluß 2 befindet. Das Stellglied 1 ist hier als Druckdose ausgebildet. Die in der Dose befindliche durch eine zylindrische Schraubenfeder vorgespannte Membran wird mit einer Druckdifferenz (d.h. Über- oder Unterdruck) beaufschlagt. Sobald die Vorspannung der Feder durch den Differenzdruck überwunden ist, wird die Strömungsklappe 7, welche starr mit der Welle 6 verbunden ist, mittels der Zug- oder Schubstange 3 der Druckdose 1 und dem Verstellhebel 5, der mit der Zugoder Schubstange 3 durch ein bewegliches Gelenk 4 verbunden ist, geöffnet. Der Verstellhebel 5 ist starr mit der Welle 6 verbunden. Mit zunehmend geöffneter Klappe kann ein immer größerer Gasstrom die Klappe passieren. Der Winkel zwischen Eingang des Abgaskanals 8 und geöffneter Strömungsklappe 7 wird als Klappenwinkel 9 bezeichnet. In Fig.1 wird gezeigt, daß die Zug- oder Schubstange einen Hebel bewegt und ein Moment in der Hebelachse erzeugt. Es ist bekannt, daß eine längerer Hebel in dieser Anordnung ein größeres Moment erzeugen kann, jedoch bei nur einem kleineren Schwenkwinkel 9.

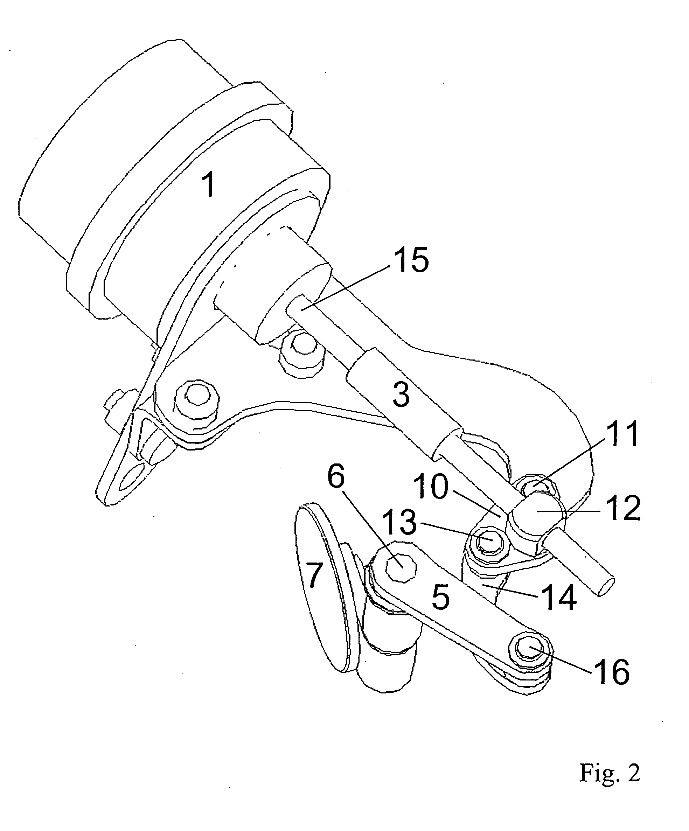

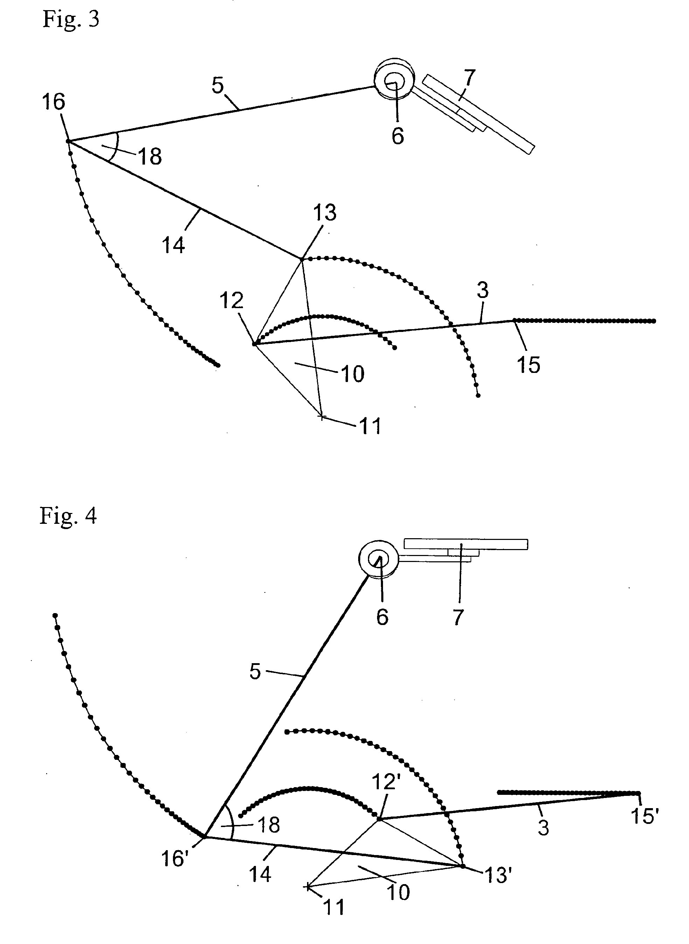

Fig. 2 zeigt eine mögliche konstruktive Ausführung der erfindungsgemäßen Hebelvorrichtung. Wie aus der Zeichnung ersichtlich ist, wird die lineare Bewegung der Zug- oder Schubstange 3 des Stellglied 1 zuerst über eine Umlenkplatte 10 in eine Schwenkbewegung von annähernd 90° um eine Gelenkachse 11 bzw. einen Anlenkpunkt, der als starrer Drehpunkt ausgebildet ist, verwandelt. Stellglied 1 kann dabei vorzugsweise eine Druckdose mit einer Zug- oder Schubstange 3 sein, die mit Gasdruck (Über- oder Unterdruck) betrieben wird und die eine Vorrichtung zur Erzeugung einer Vorspannung, wie z.B. eine Spiralfeder, enthalten kann. Als Stellglied 1 können auch andere geeignete Antriebe wie z.B. elektrische, elektromechanische, hydraulische oder sonstige geeignete Antriebe verwendet werden. Die zweihebelarmige Umlenkplatte 10 weist insgesamt 3 Gelenkachsen oder Anlenkpunkte auf, welche in Form eines Dreiecks auf der Umlenkplatte angeordnet sind. Die Umlenkplatte selbst kann vorzugsweise in Form eines Dreiecks ausgebildet sein. Jedoch sind auch andere Formen möglich wie beispielsweise sämtliche länglichen, runden, ovalen, (recht)eckigen, V-förmigen oder sonstigen Formen, die geeignet sind, die auf der Umlenkplatte befindlichen 3 Gelenkachsen oder Anlenkpunkte flächenhaft zu umschließen. Dies sind neben dem Anlenkpunkt 11 die Anlenkpunkte 12 und 13, wobei der Punkt 12 über ein Gelenk mit der Zugstange 3 und der Punkt 13 über ein weiteres Gelenk mit dem wenigstens einen weiteren Hebel 14 verbunden ist. Um den als starren Drehpunkt ausgebildeten Anlenkpunkt 11 können sich die beiden anderen Anlenkpunkte 12 und 13 auf einer Kreisbahn drehen. Punkt 12 führt durch diese Anordnung nur eine geringe vertikale Bewegung durch, somit kann auf ein zusätzliches Gelenk im Punkt 15 verzichtet werden. An der Umlenkplatte 10 ist der Hebel 14 drehbar im Punkt 13 gelagert. Die Bewegung des Punktes 13 wird über den Hebel 14 auf das Gelenk 16 übertragen. Dieses Gelenk ist wiederum über den Hebel 5 mit der Welle 6 verbunden. Hebel 5 ist in einem definierten Winkel zur Strömungsklappe 7 starr mit der Welle 6 verbunden, wobei die Strömungsklappe 7 ebenfalls starr an der Welle 6 angeordnet ist. Die Erfindung zeigt nun vorteilhafterweise, wie trotz eines großen Schwenkwinkels zum einen ein großes Moment beim fortschreitenden Schließvorgang der Klappe übertragen und zum anderen trotz Verwendung einer kleinen Stelleinheit eine Strömungsklappe mit großer Kraft sicher geschlossen werden kann. Hierzu wird, wie in Fig. 3 und 4 gezeigt, statt eines einfachen Hebels erfindungsgemäß in vorteilhafter Weise eine spezielle Anordnung mehrerer Hebel verwendet, die es ermöglicht, einen großen Öffnungswinkel zu realisieren.

Wie nachfolgend in Fig. 3 beispielhaft dargestellt, zeigt die Prinzipzeichnung eine erfindungsgemäße Vorrichtung mit zwei Hebeln und einer Umlenkplatte. Auf die Darstellung der Stelleinheit 1, hier als Unterdruckdose vorgesehen, wurde verzichtet. Die lineare Bewegung der Zug- oder Schubstange 3 der Unterdruckdose 1 wird zuerst über eine Umlenkplatte 10, welche hier nicht explizit dargestellt ist, in eine Schwenkbewegung von annähernd 90° um die Gelenkachse 11 bzw. den Anlenkpunkt, der als starrer Drehpunkt ausgebildet ist, verwandelt. Diese zweihebelarmige Umlenkplatte 10 weist insgesamt 3 Gelenkachsen oder Anlenkpunkte auf, welche in Form eines Dreiecks angeordnet sind, wie aus Fig. 3 ersichtlich. Dies sind neben dem Anlenkpunkt 11 die Anlenkpunkte 12 und 13, wobei der Punkt 12 über ein Gelenk mit der Zug- oder Schubstange 3 und der Punkt 13 über ein weiteres Gelenk mit dem wenigstens einen weiteren Hebel 14 verbunden ist. Um den als starren Drehpunkt ausgebildeten Anlenkpunkt 11 können sich die beiden anderen Anlenkpunkte 12 und 13 auf einer Kreisbahn drehen. Punkt 12 führt durch diese Anordnung nur eine geringe vertikale Bewegung durch, dargestellt durch eng zusammenliegende, äquidistante Punkte der im Anschluß an Punkt 12 gezeigten Kreisbahn. Somit kann auf ein zusätzliches Gelenk im Punkt 15 verzichtet werden. An der Umlenkplatte 10 ist der Hebel 14 drehbar im Punkt 13 gelagert. Die Bewegung des Punktes 13 wird über den Hebel 14 auf das Gelenk 16 übertragen. Dieses Gelenk ist wiederum über den Hebel 5 mit der Welle 6 der zu betätigenden Strömungsklappe 7 verbunden. In dieser Stellung stehen die Verbindungslinien zwischen den Gelenkachsen oder Anlenkpunkten 15 und 12 sowie 11 und 13 annähernd senkrecht aufeinander. Somit bewirkt eine geringe Bewegung der Zugoder Schubstange 3 (dargestellt durch eng zusammenliegende, äquidistante Punkte im Anschluß an Punkt 15) in dieser Position eine starke horizontale Bewegung des Punktes 13, auf einer ebenfalls im Anschluß an diesen mittels äquidistanten, weiter auseinanderliegenden Punkt gezeigten Kreisbahn. Eine starke horizontale Bewegung im Punkt 16, übertragen durch den Hebel 14, führt zu einer starken Winkeländerung an der Welle 6, da bei geöffneter Strömungsklappe der Winkel 18 zwischen den Hebeln 14 und 5 klein ist. Insgesamt führt also in dieser Position eine kleine Bewegung der Zug- oder Schubstange 3 zu einer großen Änderung des Klappenwinkels 9. Dadurch ergibt sich ein kleiner, effektiver Gesamthebelarm, d.h. es handelt sich um eine relativ direkte Übersetzung. Da in dieser Stellung "auf" fast kein Moment benötigt wird, reicht das in dieser Position auf die Welle übertragene kleine Moment völlig aus.

In Fig. 4 zeigt sich die Anordnung bei geschlossener Strömungsklappe, wobei auch hier auf die Darstellung der Unterdruckdose 1 verzichtet wurde. Bei geschlossener Strömungsklappe ändert sich die Anlenkpunkte 12 in 12', 13 in 13', 15 in 15' und 16 in 16'. In dieser Stellung verursacht eine kleine Bewegung der Zug- oder Schubstange 3 nur eine geringe horizontale Verschiebung des Punktes 13'. Durch den geringen vertikalen Abstand zwischen dem Drehpunkt 11 und dem Anlenkpunkt 13' können nun große Kräfte auf den Hebel 14 übertragen werden. Da sich gleichzeitig der vertikale Abstand zwischen dem Gelenk 16' und dem Mittelpunkt der Welle 6 stark vergrößert hat, kann nun ein großes Moment auf diese Achse übertragen werden. Die Positionen der Gelenkachsen oder Anlenkpunkte 12,13, 15 und 16 sind beim Übergang von der geöffneten Klappe zur geschlossenen Klappe bei den Figuren 3 und 4 durch jeweils 33 korrespondierende Punkte dargestellt. Der Hub der Zug- und Schubstange von Position "auf" nach Position "zu", d.h. von Anlenkpunkt 15 nach Anlenkpunkt 15', ist in 32 äquidistante Abschnitte aufgeteilt. Befindet sich Anlenkpunkt 15 z.B. in der Position "7. Punkt von links", dann befindet sich der Anlenkpunkt 12 ebenfalls am 7. Punkt von links auf seiner Kreisbahn. Auch der Anlenkpunkt 13 ist zum 7. Punkt seiner Kreisbahn vorgerückt und damit liegt auch der Anlenkpunkt 16 auf dem 7. Punkt seiner Kreisbahn von oben gerechnet. Je weiter die Klappe geschlossen wird, um so indirekter wird die Übersetzung, um so länger wird der effektive Hebelarm und um so größer wird die verfügbare Kraft an der Klappe. Dies erkennt man auch daran, daß die Punkte der Kreisbahn, die das Gelenk zwischen den Hebeln 5 und 14 einnehmen kann, um so enger stehen, je mehr man sich der Position 16' nähert. Je mehr man sich der Position "zu" nähert, desto weniger bewegt sich die Klappe. In äußerst vorteilhafter Weise trägt dies zum sicheren Schließen der Strömungsklappe gegen den Gasgegendruck bei.

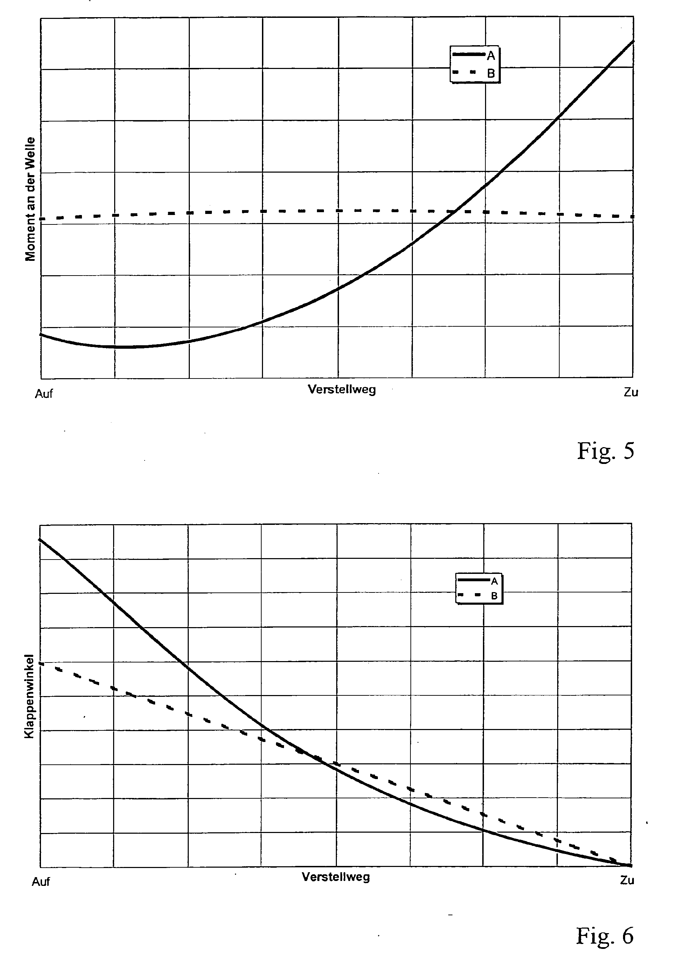

Fig. 5 beschreibt qualitativ das an der Klappenwelle 6 wirkende Moment in Abhängigkeit des Verstellweges, wobei eine erfindungsgemäße zweihebelarmige Hebelvorrichtung A mit einer konventionellen Hebelvorrichtung B mit nur einem Hebel verglichen wird. Hierbei zeigt sich bei der erfindungsgemäßen Hebelvorrichtung A, daß beim Schließen der Strömungsklappe 7 das maximal verfügbare Moment an der Klappenwelle 6 umso größer ist, je weiter sich die Strömungsklappe 7 der Position "zu" nähert. Gleichzeitig wird auch der effektive Hebelarm an der Strömungsklappe 7 immer größer. Der Verlauf des effektiven Hebelarms gleicht dem Verlauf des Momentes über den Verstellweg. Im Gegensatz dazu ist bei der konventionellen Hebelvorrichtung B das an der Klappenwelle 6 wirkende Moment über den gesamten Verstellweg nahezu konstant. Dies bedeutet, daß die Strömungsklappe 7 nicht vollständig gegen den Gasgegendruck verschließen und somit ein gewisser Volumenstrom an Gas entweichen kann. Dies führt zu einer Beeinträchtigung der Motorleistung.

Fig. 6 beschreibt den Klappenwinkel 9 in Abhängigkeit des Verstellweges, wobei eine erfindungsgemäße zweihebelarmige Hebelvorrichtung A mit einer konventionellen Hebelvorrichtung B mit nur einem Hebel verglichen wird. Bei der konventionellen Hebelvorrichtung B ändert sich der Klappenwinkel über den gesamten Verstellweg in nahezu konstanter Weise, wohingegen bei der erfindungsgemäßen Hebelvorrichtung A die Strömungsklappe am Anfang einen größeren Weg zurücklegt, je weiter sich die Klappe jedoch der Position "zu" nähert, desto weniger bewegt sich die Klappe und desto mehr Kraft kann die Klappe zum sicheren Verschließen aufbringen. Ebenso vergrößert sich in vorteilhafter Weise der Öffnungswinkel 9 gegenüber der konventionellen Einhebellösung B deutlich, wie aus Fig. 6 in der Position "auf" in eindeutiger Weise ersichtlich ist.

Erfindungsgemäß kann die Strömungsklappe in Abgassystemen angeordnet sein, beispielsweise in Abgasturboladersystemen im Bereich des Abgasstroms als Waste-Gate-Klappe, auch als Abblaseventil bezeichnet, als Hochdruck-Bypass-Klappe oder ähnliches, im Bereich des Frischluftstroms als Frischluft-Bypassklappe, als Abströmklappe oder ähnliches, oder in Abgasreinigungssystemen als Bypass-Klappe, als Regelklappe zur Schaltung eines oder mehrere Abgasstränge im Abgasreinigungssystem oder ähnliches.

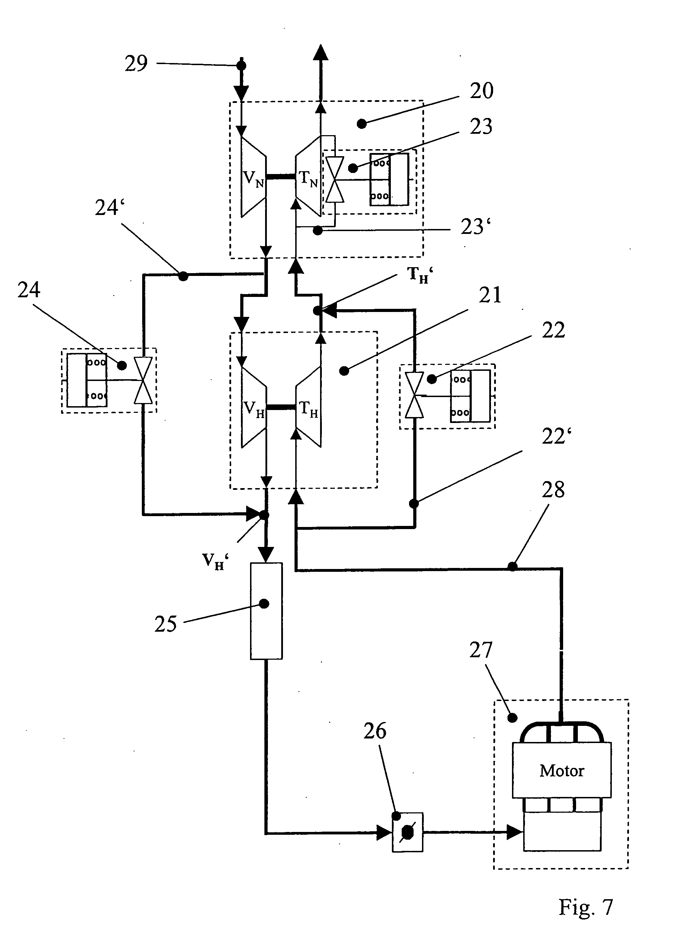

Besonders bevorzugt ist die Erfindung an einem Abgasturboladersystem mit zweistufiger Aufladung angeordnet. Fig. 7 zeigt einen möglichen Aufbau eines solchen Abgasturboladersystems. Es enthält neben einer Brennkraftmaschine 27 einen Niederdruck-Abgasturbolader 20 mit Verdichter- V_{N} und Turbinenteil T_{N,} einen Hochdruck-Abgasturbolader 21 mit Verdichter- V_{H} und Turbinenteil T_{H,} eine Hochdruckturbinen-Bypassklappe mit erfindungsgemäßer Hebelvorrichtung und pneumatischem Klappenantrieb 22, ein Abblaseventil oder Waste-Gate mit erfindungsgemäßer Hebelvorrichtung und pneumatischem Klappenantrieb 23, eine Hochdruckverdichter-Bypassklappe mit erfindungsgemäßer Hebelvorrichtung und pneumatischem Klappenantrieb 24, sowie einen Ladeluftkühler 25 und eine Drosselklappe 26.
Bei dieser Anordnung wird das Abgas der Brennkraftmaschine 27 über die Abgasleitung 28 zur Turbine T_{H} des Hochdruck-Abgasturboladers 21 geführt. Sobald der Abgasmassenstrom der Brennkraftmaschine 27 größer wird, als die Turbine T_{H} passieren kann, wird die Hochdruckturbinen-Bypassklappe 22 geöffnet und ein Teil des Abgasmassenstroms wird an der Turbine T_{H} über die Bypassleitung 22' vorbeigeleitet. Am Austritt der Turbine T_{H} vereinigen sich beide Abgasmassenströme im Punkt T_{H}' und gelangen zum Eingang der Niederdruckturbine T_{N} des Niederdruck-Abgasturboladers 20. Nach geleisteter Arbeit in der Niederdruckturbine T_{N} gelangen die Abgase in die Atmosphäre. Sobald der Abgasmassenstrom der Brennkraftmaschine 27 größer wird, als die Turbine T_{N} passieren kann, wird das Abblaseventil 23 geöffnet und ein Teil des Abgasmassenstroms wird an der Turbine T_{N} über die Bypassleitung 23' vorbeigeleitet. Die zur Verbrennung notwendige Luft wird am Punkt 29 vom Verdichter V_{N} des Niederdruck-Abgasturboladers 20 angesaugt, verdichtet und zum Verdichter V_{H} des Hochdruck-Abgasturbolader 21 weitergeleitet. Dort wird die Luft im Verdichter V_{H} weiterverdichtet. Ist der am Verdichter V_{H} ankommende Luftmassenstrom größer als der für die Passierung des Verdichter V_{H} maximal zulässige Luftmassenstrom, wird die Hochdruckverdichter-Bypassklappe 24 geöffnet und ein Teil der verdichteten Luft wird über die Bypass-Leitung 24' am Verdichter V_{H} vorbeigeführt. Nach dem Verdichter V_{H} vereinigen sich die beiden Luftwege, vom Verdichter V_{H} und von der Hochdruckverdichter-Bypassklappe 24 kommend, im Punkt V_{H}'. Der wiedervereinigte Luftmassenstrom gelangt nun durch den Ladeluftkühler 25 und die Drosselklappe 26 in die Brennkraftmaschine 27.

Bild 8 zeigt eine weitere bevorzugte Anordnung der Erfindung in einem Abgasreinigungssystem einer Brennkraftmaschine. Hier ist als ein Beispiel eine Strömungsklappe mit erfindungsgemäßer Hebelvorrichtung und pneumatischem Klappenantrieb 37 in einen der Abgasstränge eingebaut. Bei geöffneter Klappe gelangen die Abgase der Brennkraftmaschine 30 über die Abgasstränge 31 oder -leitungen und die Übersprechleitung 32 in die beiden Katalysatoren 33 und 34. Nach Passieren des Schalldämpfers 35 werden die Abgase in die Atmosphäre entlassen. Wird jedoch ein Teil der Zylinder, hier die Seite mit der Zylinderbank 36, abgeschaltet, wird auch die Strömungsklappe 37 durch die erfindungsgemäße Hebelvorrichtung dicht verschlossen, um den Katalysator 34 vor Auskühlung zu schützen.

## Patentansprüche

1. Abgassystem für eine Brennkraftmaschine enthaltend mindestens eine Strömungsklappe (7) und mindestens eine Stelleinheit (1), wobei zwischen der Strömungsklappe (7) und der Stelleinheit (1) eine Hebelvorrichtung angeordnet ist zur Umsetzung einer Bewegung der Stelleinheit (1) in eine Bewegung der Strömungsklappe (7), wobei die Hebelvorrichtung eine mit der Stelleinheit (1) verbundene Zugoder Schubstange (3) und eine Welle (6) enthält, wobei die Strömungsklappe (7) und ein erster Hebel (5) starr miteinander über die Welle (6) verbunden sind und wobei das freie Ende des ersten Hebels (5) ein Gelenk aufweist,
**dadurch gekennzeichnet,**
**dass** die Hebelvorrichtung weiter folgendes umfasst:
- wenigstens einen weiteren Hebel (14) und
- eine mehrhebelarmige Umlenkplatte (10) mit 3 Gelenkachsen (11, 12, und 13) oder Anlenkpunkten, welche in Form eines Dreiecks angeordnet sind.

2. Abgassystem nach Anspruch 1,
**dadurch gekennzeichnet,**
**dass** das Stellglied (1) als Druckdose ausgebildet ist, welche mit Über- oder Unterdruck betreibbar ist.

3. Abgassystem nach Anspruch 1,
**dadurch gekennzeichnet,**
**dass** das Stellglied (1) auch als elektrischer, elektromechanischer oder hydraulischer Antrieb ausgebildet ist.

4. Abgassystem nach Anspruch 1,
**dadurch gekennzeichnet,**
**dass** die Umlenkplatte (10) als eine zweihebelarmige Umlenkplatte ausgeführt ist.

5. Abgassystem nach Anspruch 4,
**dadurch gekennzeichnet,**
**dass** die Umlenkplatte (10) in Form eines Dreiecks ausgebildet ist.

6. Abgassystem nach Anspruch 5,
**dadurch gekennzeichnet,**
**dass** eine der Gelenkachsen (11) oder Anlenkpunkte der Umlenkplatte (10) als starrer Drehpunkt ausgebildet ist, um die sich die beiden anderen Achsen (12, 13) auf einer Kreisbahn drehen können.

7. Abgassystem nach Anspruch 1,
**dadurch gekennzeichnet,**
**dass** der wenigstens eine weitere Hebel (14) an einem Ende über ein Gelenk (16) drehbar mit dem ersten Hebel (5), am anderen Ende über ein Gelenk (13) drehbar mit der Umlenkplatte (10) verbunden ist.

8. Abgassystem nach Anspruch 1,
**dadurch gekennzeichnet,**
**dass** die Strömungsklappe (7) in Abgasturboladersystemen im Bereich des Abgasstroms als Waste-Gate-Klappe oder als Hochdruck-Bypass-Klappe, im Bereich des Frischluftstroms als Frischluft-Bypassklappe oder als Abströmklappe oder in Abgasreinigungssystemen als Bypass-Klappe oder als Regelklappe zur Schaltung eines oder mehrere Abgasstränge in Abgasreinigungssystemen angeordnet ist.
